Europäisches Patentamt

European Patent Office

Office européen des brevets

(19)

(11) Publication number: **0 246 892**

**A2**

## EUROPEAN PATENT APPLICATION

(12)

(21) Application number: 87304518.1

(22) Date of filing: 21.05.87

(51) Int. Cl.³: **G 01 D 5/34**

(30) Priority: 21.05.86 GB 8612404

(43) Date of publication of application:
25.11.87 Bulletin 87/48

(84) Designated Contracting States:
DE FR GB IT SE

(71) Applicant: BRITISH AEROSPACE PUBLIC LIMITED COMPANY
11 Strand
London WC2N 5JT(GB)

(72) Inventor: Kalawsky, Roy Steven
135 Newland Park
Hull N. Humberside, HU5 2DT(GB)

(74) Representative: Gold, Tibor Zoltán
T.Z.GOLD & COMPANY 9, Staple Inn
London WC1V 7QH(GB)

(54) Optical position transducer.

(57) An optical transducer is provided for measuring the position of an object. The transducer comprises a fixed polariser (22), a rotatable polariser (23), a drive unit (30) for rotating the rotatable polariser (23) in proportion to the linear or angular displacement in the position of the object (31); a light source, a light guide (24) for directing a beam of light of known intensity through the polarisers (22, 23) and a light guide (25) to pass the light to a detector for measuring its intensity, whereby the modulation in light intensity effected by the rotatable polariser (23) is indicative of the change in position of the object (31). If the light source is a laser producing a coherent beam, then the fixed polariser (22) can be omitted. In this way, the transducer converts linear or angular position into modulation of the intensity of a light beam by purely optical means.

FIG.4

## OPTICAL POSITION TRANSDUCER

This invention relates to optical position transducer arrangements for providing position signals which can be used e.g. in fibre optic signalling systems.

Fibre optic signalling systems have many advantages over electronic signalling systems, especially in environments where radio frequencies and/or electromagnetic pulses can cause interference or total failure of electronic systems.

Known optical transducer arrangements are, generally speaking, the optical equivalent of electrical potentiometers. It is known to use what is known as an optical shaft encoder to provide position signals in optical signalling systems. These fall into two categories: incremental and absolute. Incremental encoders give an output which must be referred to some zero or alignment pulse at switch-on (or if the count is lost). An absolute encoder, on the other hand, gives a parallel output from many read points, which form a unique word for every increment of its resolution. The shaft angle information is therefore valid at switch-on, regardless of shaft rotation while the power is off.

The shaft encoder in its simplest form comprises a disc with circumferential tracks of transparent windows in an opaque background supported on a shaft mounted in bearings. An array of photodetetors is positioned so that there is a detector under each track on the disc, and these are irradiated through the disc by a single collimated light source of a suitable array of light emitting diodes. As the disc is rotated, each detector is energised, or not, according to the track pattern and its orientation. Hence a unique digital word of ON's and OFF's are produced.

The disc is coded in binary in which the outer track is the least significant ($2^0$) and the tracks increase in significance by powers of two towards the centre. In practice it is not possible to align the switching points with sufficient accuracy to avoid ambiguity. This has been solved by using a special coded disc based on a 'Gray-Code'. On a gray code disc the track patterns are arranged in such a way that only one transition occurs at any increment around the disc. This information can be read by a single row of detectors without ambiguities occurring.

Encoder accuracy is principally governed by the physical size of the disc. As an example, a 14 bit gray code disc with the least significant track at a mean diameter of 100 mm will have line and window widths of 37.5 microns. These widths are very close to the practical limit for reliable production of discs.

These known optical shaft encoders, whilst overcoming the problems of mechanical wear and electrical noise associated with electrical potentiometers, still require a number of light detectors. This results in a fairly large shaft encoder with a large number of discrete interface signals.

This invention has for an objective the provision of an optical position transducer/sensor arrangement that has the advantages of known optical encoders but with the added advantages of being physically small, of being a purely optical arrangement in which both the input and the output are light beams; of being equally usable for measuring linear and angular displacement; and of eliminating the adverse effect of fluctuations in the intensity of a source of light.

A further objective is the provision of an optical transducer arrangement which is completely passive, i.e. light can be ducted in, modulated in the arrangement, and ducted out by way of a single fibre-optic cable.

According to one aspect of the invention, there is provided an optical transducer for measuring the position of an object, comprising an angularly displaceable polariser, drive means for connecting the said polariser to said object so that a displacement in the position of said object produces a functionally related angular displacement of said polariser, means for directing a beam of plane-polarised or coherent light of known intensity through said polariser, and detecting means for detecting the said beam and measuring its intensity, whereby the modulation in light intensity effected in use by the said polariser is indicative of the change in position of said object.

According to another aspect of the invention, there is provided an optical transducer for measuring the position of an object, comprising a fixed polariser, an angularly displaceable polariser, drive means for connecting the said displaceable polariser to said object so that a displacement in the position of said object produces a functionally related angular displacement of said displaceable polariser, means for directing a beam of light of known intensity through said polarisers, and detecting means for detecting the said beam and measuring its intensity, whereby the modulation in light intensity effected in use by the said displaceable polariser is indicative of the change in position of said object.

In a preferred embodiment, a beam splitter is placed between the source of said beam and the displaceable polariser, one of the resulting beams being modulated by being passed through said displaceable polariser and thence to said detecting means, while the other is passed unmodulated to said detecting means, and means included in said detecting means for measuring the difference in intensity in said beams.

Digitising means may be provided for digitising the output of the detecting means, and a computer is connected to said digitising means for processing the said digitised output.

Embodiments of an optical position transducer according to the invention are described by way of example with reference to the accompanying drawings, in which:-

Figure 1 illustrates diagrammatically the basic features of an optical transducer arrangement according to the invention,

Figure 2 is a graph of the variation of light intensity transmitted through a pair of polarisers, forming part of the arrangement according to the invention as a function of the angle between the polarisers,

Figure 3 is a diagram of a first embodiment of a practical transducer arrangement according to the invention, and

Figure 4 is a diagram of a second embodiment of a transducer arrangement.

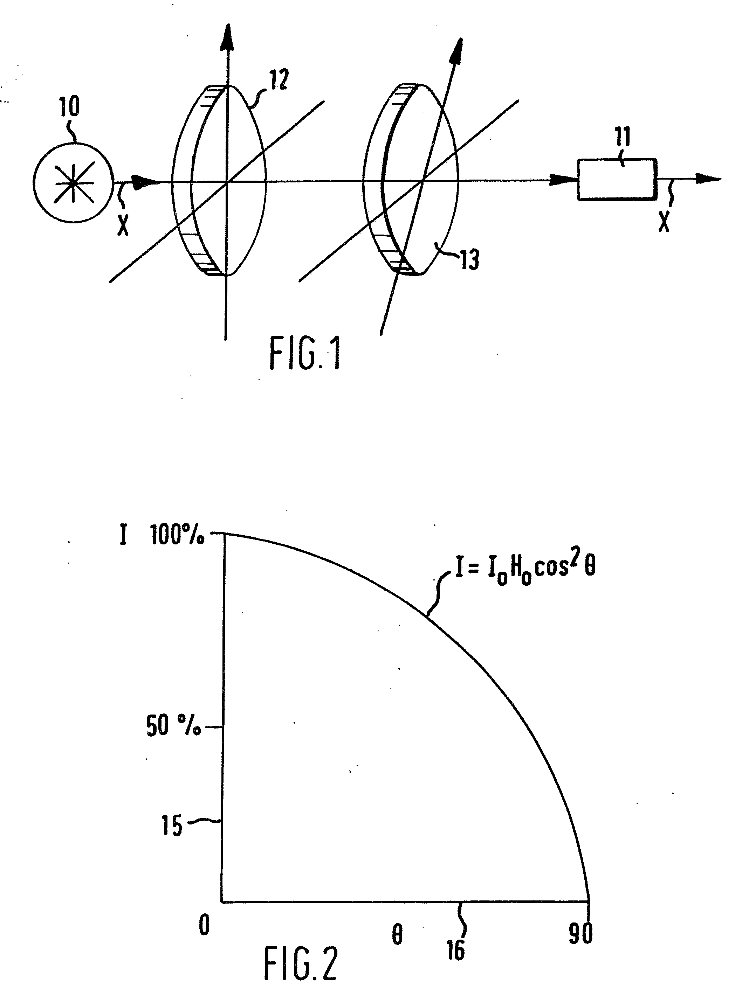

Referring first to Figure 1, a light source 10 is arranged in alignment with a detector 11 along an axis designated X - X for reference. Two linear polarisers 12 and 13 are positioned between the detector 11 and the light source 10 upon the axis X - X, one (e.g. that referenced 12) being fixed, and the other (e.g. that referenced 13) being rotatable about the axis X - X. By such relative rotation the light transmitted to the detector is attenuated. It is possible to vary the attenuation smoothly throughout a wide range, typically 100,000 to 1.

The attenuation obeys a fixed and well-known law, namely the law of Malus, according to which the intensity is proportional to the square of the cosine of the angle between the plates of incidence at the polarisers, respectively. This is illustrated in Figure 2, where the ordinate 15 denotes the percentage of light intensity transmitted (I) and the abscissa 16 denotes the relative angular displacement of the two polarisers 12 and 13.

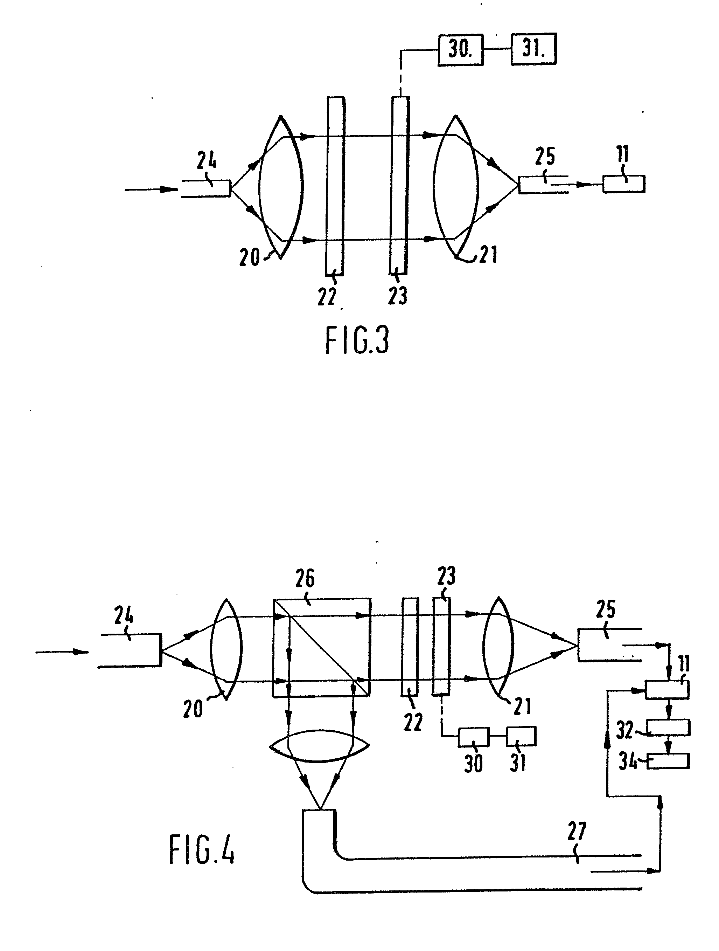

In Figure 3, a passive, self-contained transducer arrangement is illustrated, comprising a collimating lens pair 20, 21, a fixed polariser 22, and a rotatable polariser 23. The polariser 23 may be rotated by drive means 30 associated with a linearly movable device 31 requiring to have its linear position sensed or it can be rotated by drive means 30 associated with a rotatable device 31 requiring its angular position to be sensed. In the first instance, a rack and pinion drive can be used whilst in the second instance a gear drive, a pulley drive or toothed belt may be used, but any other suitable drive means may also be used.

Light is introduced to the transducer arrangement from a remote source, e.g. that referenced 10 in Figure 1, via a light guide 24, e.g. a fibre-optic cable, and modulated light is returned from the arrangement via a light guide 25 to a remote detector, e.g. that referenced 11 in Figure 1.

Thus the detector is fed a light signal which is an indication of the relative disposition of the two polarisers 22, 23 and hence an indication of the position, either linear or angular, of the device the position or disposition of which is to be sensed.

It is envisaged that a transducer arrangement including both a light source and detector could be made in an assembly approximately 1/4 inch (0.06 cm) in diameter and 1/2 inch (0.12 cm) in length. This naturally may be reduced if the source and detector are remotely positioned as in Figure 3.

If a laser light source is provided, that is to say a coherent beam, and used in conjunction with a light guide of the type which maintains the polarisation relationship of the source, the fixed polariser 22 can be dispensed with. Thus an even more compact transducer arrangement can be provided.

A very precise transducer arrangement having long term stability is illustrated in Figure 4. This uses a technique of differential-intensity referencing in which two fibre-optic output paths are provided, one for the polarisation modulated beam and one for a non-modulated reference beam.

Using the same reference numerals in Figure 4 as in Figure 3 for like components a beam splitter 26 is inserted into the optical path between the lens 20 and the fixed polariser 22. The beam splitter 26 diverts a non-modulated beam to an output light guide 27 via a lens similar to that referenced 21. The resulting twin beams, providing a reference signal and a modulated signal are coupled into a remote detector (e.g. reference 11 Figure 1) where any difference in intensity is measured. Any variation in source light intensity is removed when the two signals are subtracted, thus providing what is termed 'common mode rejection' in the electronics field.

There are many types of detector 11 existing which are suitable for use with this invention and the exact choice will be dependent upon the type of light source 10 used. Where the output from the detector 11 is an analogue signal representing the cosine of the angular position of the displaceable polariser 23, this signal is interfaced with a small analogue-to-digital (A/D) converter 32 to provide appropriate signals for a processing computer 34. The cosine law can readily be translated to other forms by the computer 34.

Resolution is dependent upon the A/D converter and also to some extent upon the dynamic range of the detector 11. The transducer sensor arrangement is not the limiting element as far as resolution is concerned.

## CLAIMS

1. An optical transducer for measuring the position of an object, comprising an angularly displaceable polariser (13; 23), characterised in that drive means (30) connect the said polariser (13; 23) to said object (31) so that a displacement in the position of said object (31) produces a functionally related angular displacement of said polariser (13; 23), means (24) for directing a beam of plane-polarised or coherent light of known intensity through said polariser (13; 23), and detecting means (11) for detecting the said beam and measuring its intensity, whereby the modulation in light intensity effected in use by the said polariser (13; 23) is indicative of the change in position of said object (31).

2. An optical transducer for measuring the position of an object, comprising a fixed polariser (12; 22), an angularly displaceable polariser (13; 23), drive means (30) for connecting the said displaceable polariser (13; 23) to said object (31) so that a displacement in the position of said object (31) produces a functionally related angular displacement of said displaceable polariser (13; 23), means (24) for directing a beam of light of known intensity through said polarisers (12; 22 and 13; 23), and detecting means (11) for detecting the said beam and measuring its intensity, whereby the modulation in light intensity effected in use by the said displaceable polariser (13; 23) is indicative of the change in position of said object (31).

3. A transducer according to claim 1 or claim 2, characterised in that a light guide, or a respective light guide (24, 25), is used to pass light from its source (10) to the or each polariser (12; 22 and 13; 23) and from there to the detecting means (11).

4. A transducer according to any preceding claim, characterised in that the said drive means (30) is a rack-and-pinion drive, a gear drive, a pulley drive or a toothed belt drive.

5. A transducer according to any preceding claim, characterised in that a beam splitter (20) is placed between the source (24) of said beam and the displaceable polariser (23), one (25) of the resulting beams being modulated by being passed through said displaceable polariser (23) and to the detecting means (11), while the other (27) is passed unmodulated to said detecting means (11), and means included in said detecting means for measuring the difference in intensity in said beams.

6. A transducer according to claim 5, characterised in that digitising means (32) are provided for digitising the output of the detecting means, and a computer (34) is connected to said digitising means (32) for processing the said digitised output.

0246892

1/2

FIG.1

$$I = I_0 H_0 \cos^2 \theta$$

FIG.2

2/2

0246892

FIG.3

FIG.4